(19) Europäisches Patentamt

European Patent Office

Office européen des brevets

(11) **EP 1 624 591 A1**

(12) **DEMANDE DE BREVET EUROPEEN**

(43) Date de publication:
08.02.2006 Bulletin 2006/06

(51) Int Cl.:
*H04B 7/06* (2006.01)          *H04L 1/06* (2006.01)

(21) Numéro de dépôt: 05016281.7

(22) Date de dépôt: 27.07.2005

(84) Etats contractants désignés:
AT BE BG CH CY CZ DE DK EE ES FI FR GB GR
HU IE IS IT LI LT LU LV MC NL PL PT RO SE SI
SK TR
Etats d'extension désignés:
AL BA HR MK YU

(30) Priorité: 02.08.2004 FR 0408534

(71) Demandeur: Nortel Networks Limited
St.Laurent, Quebec H4S 2A9 (CA)

(72) Inventeurs:
• Lucidarme, Thierry
78180 Montigny Le Bretonneux (FR)
• Ben Rached, Nidham
75017 Paris (FR)

(74) Mandataire: Ameline, Jean-Paul B.C. et al
Nortel Networks S.A
Intellectual Property Law Group-CT34,
Parc d'activités de Magny-Chateaufort,
Chateaufort
F-78928 Yvelines Cedex 9 (FR)

(54) **Procédé d'émission radio à diversité spatiale et émetteur radio mettant en oeuvre le procédé**

(57) Dans un système de radiocommunication utilisant des codes de canal sensiblement orthogonaux affectés à différents canaux physiques, on produit un bloc de symboles numériques codés à partir d'information de trafic relevant d'une session de communication, la production du bloc comprenant l'application d'un codage correcteur d'erreurs. On répartit les symboles codés du bloc en p séquences de symboles, et on émet les p séquences de symboles sur p canaux physiques respectifs au moyen de n antennes d'émission, n et p étant des entiers plus grands que 1. Chacune des p séquences de symboles est émise par l'intermédiaire d'une seule des n antennes. Chacune des n antennes est utilisée pour émettre $\lfloor p/n \rfloor$ ou $\lfloor p/n \rfloor+1$ séquences parmi les p séquences, $\lfloor p/n \rfloor$ désignant l'entier égal ou immédiatement inférieur à p/n.

FIG.1.

**Description**

La présente invention concerne les techniques de diversité d'émission utilisées le domaine des radiocommunications à étalement de spectre. Elle s'applique notamment aux systèmes radiocommunications avec accès multiple par répartition de codes (CDMA, "Code-Division Multiple Access").

On considère un canal de transmission entre un émetteur pourvu de n antennes d'émission et un récepteur pourvu de m antennes de réception. Dans un système à diversité spatiale d'émission, le nombre n est supérieur à un alors que le nombre m peut être égal ou supérieur à un.

On décrit ci-après le cas du CDMA à séquence directe (DS-CDMA, "Direct Sequence CDMA"), mais on comprendra que l'invention n'est pas limitée à ce cas de figure. Elle est également applicable, en particulier, au CDMA multi-porteuse (MC-CDMA, "Multi-Carrier CDMA") qui utilise une technique de multiplexage par répartition orthogonale de fréquence (OFDM, "Orthogonal Frequency Division Multiplexing").

Dans le cas du DS-CDMA, la ressource d'accès allouée à un canal consiste en un code d'étalement c(t) constitué par une séquence périodique d'échantillons complexes appelés "chips", de cadence $f_c$, servant à moduler n séquences de symboles complexes $s_i(t)$ ($1 \leq i \leq n$) ayant une cadence de symboles $f_s$ plus petite que $f_c$. Le rapport SF = $f_c/f_s$ est le facteur d'étalement du canal. Le signal $y_j(t)$ capté par la j-ième antenne de réception ($1 \leq j \leq m$) s'écrit:

$$y_j(t) = \sum_{i=1}^{n} s_i(t)\left[c(t) \otimes h_{ij}(t)\right] + w(t) \qquad (1)$$

où $\otimes$ désigne l'opération de convolution, et w(t) désigne du bruit supposé blanc et gaussien. Pour un même utilisateur, le même code d'étalement est utilisé sur les différentes antennes d'émission. Dans un système CDMA, le bruit w(t) contient des contributions relatives à d'autres utilisateurs du système.

La réponse impulsionnelle $h_{ij}(t)$ du canal de propagation entre la i-ième antenne d'émission et la j-ième antenne de réception est classiquement estimée par le récepteur grâce à des séquences pilotes connues respectivement émises par les n antennes d'émission. Elle est généralement modélisée par un ensemble de p trajets pris en compte par couple d'antennes (p ≥1), le k-ième trajet ($1 \leq k \leq p$) correspondant à un retard de réception $\tau_k$ et à une amplitude complexe de réception $a_{ijk}$. Chaque canal de propagation (i-ième antenne d'émission vers j-ième antenne de réception) est ainsi associé par le récepteur à un vecteur de p amplitudes: $A_{ij} = [a_{ij1}\ a_{ij2} \cdots a_{ijp}]^T$ (la notation $[.]^T$ désigne la transposition).

La démodulation dans un système à spectre étalé consiste à désétaler le signal reçu au niveau de chaque écho, par corrélation du signal reçu avec le code d'étalement. Le récepteur le plus couramment utilisé est le récepteur "rake", dans lequel le signal issu de chaque antenne j est soumis à un filtre adapté au code d'étalement dont la sortie est échantillonnée aux instants correspondant aux p trajets identifiés. Ceci fournit un vecteur Z = $[z_{11} \cdots z_{1p} \cdots z_{m1} \cdots z_{mp}]^T$, où $z_{jk}$ désigne la sortie du filtre adapté relatif à l'antenne j, échantillonnée avec le retard $\tau_k$. Ainsi, à un temps symbole donné, on obtient le système d'équations:

$$Z = HS + N \qquad (2)$$

où

- 
$$H = \begin{bmatrix} A_{11} & \cdots & A_{n1} \\ \vdots & \ddots & \vdots \\ A_{1m} & \cdots & A_{nm} \end{bmatrix}$$

est une matrice représentative du canal global, de mp lignes et n colonnes;
- S = $[s_1 \dots s_n]^T$ est un vecteur contenant les n symboles transmis au temps considéré depuis les n antennes d'émission; et
- N est un vecteur de bruit de taille mp.

Le système (2) est d'une forme très couramment rencontrée en traitement du signal. Il se résout facilement par une méthode classique d'estimation par moindres carrés (MMSE, "minimum mean squared error") à condition que le rang de la matrice H soit au moins égal à n. La solution MMSE s'écrit:

$$\hat{S} = \left(H^{*}H\right)^{-1}H^{*}Z \qquad\qquad (3)$$

En supposant que les antennes ne sont pas parfaitement corrélées, le rang de la matrice H est généralement égal au minimum des entiers n et mp. La condition nécessaire et suffisante pour pouvoir résoudre le système (2) par la méthode MMSE est alors mp $\geq$n. Une fois cette condition vérifiée, il est possible de résoudre le système selon la technique souhaitée, par la méthode MMSE ou par une autre méthode telle que par exemple l'estimation de séquence au maximum de vraisemblance (MLSE, "maximum likelihood sequence estimation"; cette méthode MLSE peut aussi être appliquée quand mp < n, mais elle est alors très instable et sensible au bruit).

Les performances du récepteur dépendent du conditionnement de la matrice du canal H, lequel dépend du nombre m d'antennes de réception, du nombre p de trajets et des propriétés de décorrélation des antennes. Des antennes corrélées provoquent un mauvais conditionnement du fait que la matrice H*H a alors des valeurs propres proches de zéro qui perturbent son inversion dans la résolution selon (3). En général, le concepteur d'une station radio à antennes multiples fait en sorte qu'elles soient décorrélées, en les espaçant suffisamment les unes des autres et/ou en les faisant rayonner selon des polarités différentes.

Dans les systèmes connus à entrées multiples et sorties multiples (MIMO, "multiple input - multiple output"), ce qui signifie que n $\geq$2 et m $\geq$2, on cherche à augmenter le débit de communication accessible pour une puissance émise donnée, en faisant émettre des symboles différents $s_1$, ..., $s_n$ par les n antennes d'émission. Ces symboles peuvent être mutuellement corrélés, s'ils sont issus d'un codage spatio-temporel, ou indépendants. Pour respecter à coup sûr la condition sur le rang de la matrice H, on est amené à équiper le récepteur d'au moins n antennes de réception. Sinon le système (2) serait insoluble en présence d'un seul trajet.

Mais dans la pratique, le récepteur étant généralement mobile et de petite taille, il est courant que le nombre m d'antennes de réception soit limité à 1 ou inférieur au nombre n d'antennes d'émission. C'est par exemple le cas le plus fréquent dans les récepteurs dont sont pourvus les terminaux mobiles. Cette situation ne permet pas de bénéficier de l'augmentation de débit qu'autorise en principe la méthode MIMO. Des exemples de tels systèmes MIMO sont décrits dans EP 0 817 401, EP 0 951 091, EP 1 117 197, WO 99/14871 et WO 99/45657.

D'autres méthodes tirent parti de la diversité spatiale sans augmentation du débit de communication. C'est par exemple le cas du schéma de diversité dans l'espace et dans le temps (STTD, "Space-Time Transmit Diversity) normalisé dans le cadre des réseaux cellulaires de troisième génération de type UMTS ("Universal Mobile Telecommunication System"). Voir section 5.3.1 de la spécification technique ETSI TS 125.211, v3.12.0, "Physical channels and mapping of transport channels onto physical channels (FDD) (3GPP TS 25.214, version 3.12.0 Release 1999)" publiée en septembre 2002. Dans ce schéma STTD, une séquence de quatre bits de canal $b_0$, $b_1$, $b_2$, $b_3$ donne lieu à l'émission d'une première séquence $b_0$, $b_1$, $b_2$, $b_3$ sur la première antenne et d'une seconde séquence corrélée $-b_2$, $b_3$, $b_0$, $-b_1$ sur la seconde antenne (n = 2). La détection d'un bit requiert alors trois temps-bit, avec un gain en diversité spatiale par rapport à la transmission simple de la séquence $b_0$, $b_1$, $b_2$, $b_3$ à puissance double sur une seule antenne.

On connaît d'autre part des méthodes de diversité d'émission dites en boucle fermée, dans lesquelles le même signal à spectre étalé est émis sur chacune des n antennes d'émission (donc là aussi sans augmentation de débit par rapport à l'utilisation d'une seule antenne), avec des paramètres d'émission déterminés à partir de données de rétroaction retournées par la station réceptrice distante et dépendant de la qualité de réception des ondes radio. En général, ces données de rétroaction sont calculées à partir des réponses impulsionnelles estimées correspondant aux canaux de propagation relatifs aux différentes antennes. La station émettrice applique alors un déphasage à chaque antenne (ou un déphasage et un gain), de telle sorte que les signaux des différentes antennes parviennent à la station réceptrice approximativement en phase. Une telle méthode de diversité d'émission en boucle fermée est notamment prévue dans les réseaux UMTS. Une description détaillée en est donnée dans la section 7 de la spécification technique ETSI TS 125.214, v3.12.0, "Physical layer procedures (FDD) (3GPP TS 25.214, version 3.12.0 Release 1999)", publiée en mars 2003.

Dans un système UMTS, l'information d'un canal de communication établi entre le réseau et un terminal fait l'objet d'un codage redondant pour la correction d'erreurs (codage de canal). L'information codée qui résulte d'un canal de communication ou plusieurs canaux de communication regroupés est transmise sur un canal physique ou multiplexée sur plusieurs canaux physiques. Chaque canal physique est défini par un code d'étalement, les différents codes d'étalement étant mutuellement orthogonaux. La chaîne de codage et de multiplexage est décrite en détail dans la spécification technique ETSI TS 125.212, v5.9.0, "Multiplexing and channel coding (FDD) (3GPP TS 25.212, version 5.9.0 Release 5)", publiée en juin 2004.

La séquence affectée à un canal physique donné peut faire l'objet d'une émission avec diversité, par exemple selon une méthode de type MIMO, STTD ou diversité d'émission en boucle fermée telle que mentionnée ci-dessus. La réception de chaque symbole individuel bénéficie alors d'un gain de diversité.

Un but de la présente invention est de proposer une méthode de diversité spatiale d'émission qui soit bien adaptée au cas de la transmission sur plusieurs canaux physiques d'informations relevant d'un ou plusieurs canaux de communication codés.

L'invention propose un procédé d'émission radio à diversité spatiale dans un système de radiocommunication utilisant des ressources d'accès respectivement affectées à différents canaux physiques afin de séparer lesdits canaux physiques. Le procédé comprend les étapes suivantes:

- produire un bloc de symboles numériques codés à partir d'information de trafic relevant d'une session de communication, la production du bloc comprenant l'application d'un codage correcteur d'erreurs;
- répartir les symboles codés du bloc en p séquences de symboles, p étant un entier plus grand que 1; et
- émettre les p séquences de symboles sur p canaux physiques respectifs au moyen de n antennes d'émission, n étant un entier plus grand que 1.

Selon l'invention, chacune des p séquences de symboles est émise par l'intermédiaire d'une seule des n antennes, et en ce que chacune des n antennes est utilisée pour émettre ⌊p/n⌋ ou ⌊p/n⌋ séquences parmi les p séquences, ⌊p/n⌋ désignant l'entier égal ou immédiatement inférieur au nombre p/n.

Ce procédé évite l'interférence entre symboles résultant de l'usage simultané des mêmes ressources de code dans les schémas connus de diversité spatiale. Le gain en diversité résulte ici de ce que le décodeur pourra détecter et corriger des erreurs de transmission de symboles émis avec des antennes différentes et rencontrant donc des conditions de propagation différentes. La transmission multicode permet d'augmenter le débit sans souffrir de la complexité des schémas MIMO habituels. La technique convient particulièrement bien aux cas où le récepteur présente un nombre d'antennes de réception (m) inférieur au nombre d'antennes d'émission (n), cas qui mettent généralement en défaut les schémas MIMO.

Une réalisation préférée du procédé comporte un équilibrage entre les n antennes des séquences correspondant à un ensemble de canaux physiques. Pour la transmission d'informations de trafic relevant de plusieurs sessions de communication, on distribue alors de façon sensiblement uniforme entre les n antennes les séquences de symboles résultant de la répartition des blocs produits à partir desdites informations de trafic. Ces dispositions permettent de conserver un relatif équilibre entre les puissances rayvnnées par les différentes antennes, et donc de profiter aux mieux des performances des amplificateurs de puissance associés aux antennes.

Un autre aspect de la présente invention se rapporte à un émetteur radio pour la mise en oeuvre du procédé ci-dessus. Cet émetteur comprend:

- n antennes d'émission, n étant un entier plus grand que 1;
- des moyens de production de blocs de symboles numériques codés à partir d'information de trafic relevant d'une session de communication, comprenant un codeur correcteur d'erreurs;
- des moyens de segmentation pour répartir les symboles codés d'un desdits blocs en un nombre p plus grand que 1 de séquences de symboles; et
- des moyens pour émettre les p séquences de symboles sur p canaux physiques respectifs au moyen des n antennes d'émission.

Les moyens pour émettre les séquences de symboles sont agencés pour émettre chacune des p séquences par l'intermédiaire d'une seule des n antennes et pour que chacune des n antennes soit utilisée pour émettre ⌊p/n⌋ ou ⌊p/n⌋+1 séquences parmi les p séquences.

D'autres particularités et avantages de la présente invention apparaîtront dans la description ci-après d'exemples de réalisation non limitatifs, en référence aux dessins annexés, dans lesquels :

- la figure 1 est un schéma synoptique d'un mode de réalisation d'un émetteur radio selon l'invention;
- la figure 2 est un schéma synoptique d'une chaîne de codage et de multiplexage pouvant être utilisée dans l'émetteur de la figure 1; et
- la figure 3 est un schéma synoptique d'un récepteur correspondant.

On s'intéresse à la transmission de séquences de symboles numériques en parallèle sur plusieurs canaux physiques. Cette transmission peut notamment intervenir dans un système de radiocommunication cellulaire de type UMTS qui utilise la technique DS-CDMA.

On considère un émetteur à n antennes et un récepteur à m antennes, avec $n \geq 2$ et $m \geq 1$. Souvent, l'émetteur fera partie d'une station de base du système cellulaire avec typiquement $n = 2$, tandis que le récepteur fera partie d'un terminal mobile avec typiquement $m = 1$. Une station de base fixe est en effet mieux adaptée à l'installation d'antennes multiples, mutuellement espacées pour être bien décorrélées.

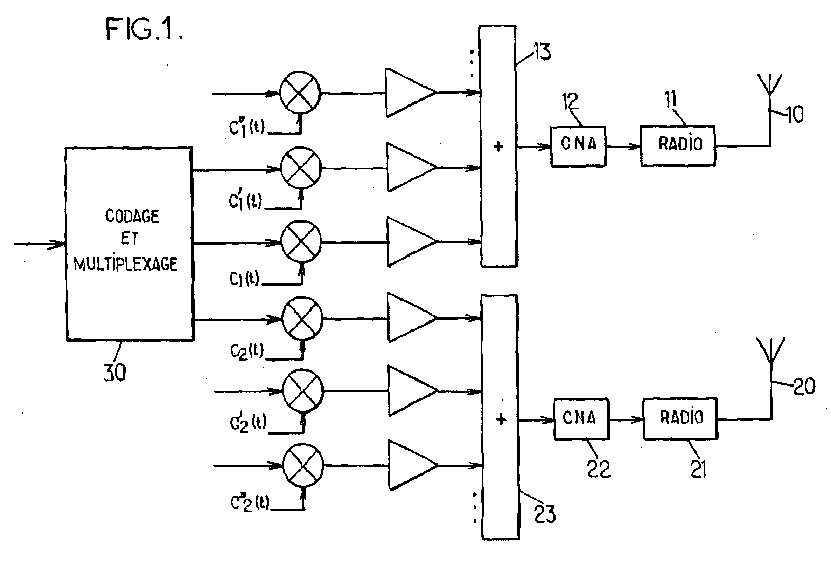

L'émetteur radio représenté sur la figure 1 comporte n = 2 antennes d'émission décorrélées 10, 20, associées chacune à un étage radio respectif 11, 21 qui applique des traitements classiques de modulation, filtrage et amplification à un signal analogique fourni par un convertisseur numérique-analogique (CNA) 12, 22. La modulation est de type QPSK ("Quadrature Phase Shift Keying", modulation par déplacement de phase en quadrature) ou de type 16-QAM ("16-state Quadrature Amplitude Modulation", modulation d'amplitude en quadrature à 16 états).

Chaque CNA 12, 22 reçoit un signal numérique qui est la combinaison d'un ensemble de contributions appartenant à des canaux physiques distincts. La combinaison est faite par un sommateur 13, 23, chaque contribution étant pondérée numériquement selon la puissance à laquelle elle doit être émise.

Chaque contribution appartenant à un canal physique est le produit d'une séquence de symboles respective et d'un code d'étalement $c_1(t)$, $c'_1(t)$, $c''_1(t)$,... , $c_2(t)$, $c'_2(t)$, $c''_2(t)$, ... affecté au canal physique. Dans le cas de l'UMTS, le code d'étalement est le produit d'un code de brouillage ("scrambling code") propre à la cellule desservie par la station de base et d'un code de canal ("channelization code") distinguant le canal physique des autres canaux physiques actifs dans la cellule. Les codes de canal utilisés dans une même cellule sont mutuellement orthogonaux pour assurer la séparation des canaux.

La séquence de symboles émise sur un canal physique est produite par une chaîne de codage et de multiplexage 30. Pour l'UMTS, cette chaîne est décrite dans la spécification ETSI TS 125.212 précitée.

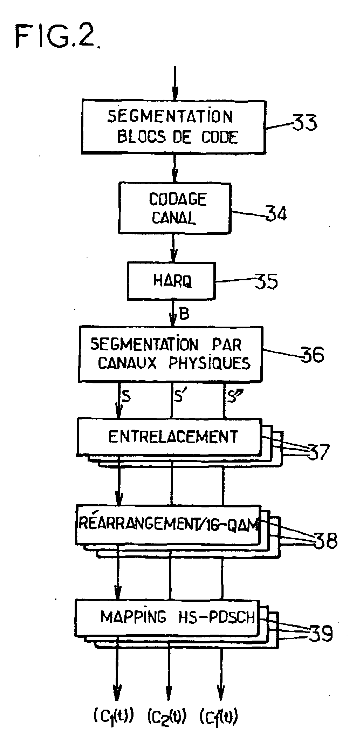

La figure 2 montre la composition de la chaîne 30 dans le cas de canaux de transport descendants partagés dits HS-DSCH ("High Speed Downlink Shared CHannel"). Ces canaux sont utilisés dans le cadre du service de transmission de données à haut débit appelé HSDPA ("High Speed Downlink Packet Access"). Une description d'ensemble de ce service peut être trouvée dans la spécification technique ETSI TS 125.308, v5.5.0, "UTRA High Speed Downlink Packet Access (HSDPA); Overall description; Stage 2 (3GPP TS 25.308, version 5.5.0 Release 5)", publiée en mars 2004.

Les canaux HS-DSCH sont multiplexés sur des canaux physiques appelés HS-PDSCH ("High Speed Physical Downlink Shared CHannel") ayant chacun un facteur d'étalement de 16. Ils permettent à une station de base de transmettre à des terminaux des données à haut débit. Les terminaux renvoient à la station de base des informations de contre-réaction, notamment des acquittements et des indications liées à la qualité des transmissions descendantes, sur des canaux dédiés montants appelés HS-DPCCH ("High Speed Dedicated Physical Control CHannel").

Les informations de trafic du HS-DSCH qui relèvent d'une session de communication déterminée avec un utilisateur sont segmentées en blocs auxquels un codage correcteur d'erreur est appliqué au moyen d'un turbocode de rendement 1/3. Sur la figure 2, le module 33 assure la segmentation des blocs HS-DSCH et le module 34 représente le turbocodeur. En aval de celui-ci, le module 35 assure la fonctionnalité HARQ ("Hybrid Automatic Repeat reQuest) spécifiée pour le service HSDPA. Le bloc de symboles codés B ainsi produit est adressé au module 36 qui effectue sa segmentation par canaux physiques. Dans l'exemple représenté sur la figure 2, le bloc codé est réparti en p = 3 séquences S, S', S" pour être transmis sur trois HS-PDSCH auxquels sont respectivement affectés les codes $c_1(t)$, $c_2(t)$ et $c'_1(t)$. Chaque séquence fait l'objet d'un entrelacement de symboles (module 37). Les bits sont réarrangés en symboles à 16 états par un module 38 si la modulation est la 16-QAM. Finalement, un module 39 place les symboles d'une séquence dans le flux transmis sur le HS-PDSCH correspondant.

La station de base a n ≥2 antennes 10, 20 pour émettre en diversité spatiale. L'invention propose une répartition particulière entre les antennes des symboles à émettre sur les p ≥2 HS-PDSCH. La répartition est effectuée par canal plutôt qu'en multiplexant les symboles successifs d'une même séquence HS-PDSCH sur les n antennes:

- chaque séquence HS-PDSCH est émise par l'intermédiaire d'une seule des n antennes;
- chaque antenne est utilisée pour émettre ⌊p/n⌋ ou ⌊p/n⌋+1 séquences parmi les p séquences relatives au bloc considéré.

Dans l'exemple des figures 1 et 2, les séquences étalées par les codes $c_1(t)$ et $c'_1(t)$ sont émises par l'intermédiaire de l'antenne 10 tandis que la séquence étalée par le code $c_2(t)$ est émise par l'intermédiaire de l'antenne 20.

Cette règle de mapping des HS-PDSCH sur les n antennes a pour avantage d'être très simple. Elle procure de la diversité spatiale parce que les symboles codés appartenant à un même bloc B sont transmis par l'intermédiaire de n antennes distinctes.

Pour un canal HS-DSCH, il est en outre prévu un ou plusieurs canaux physiques de contrôle partagés spécifiques appelés HS-SCCH ("High Speed Shared Control Channel"). Les informations de signalisation portées par les HS-SCCH identifient les terminaux destinataires des blocs transmis sur les HS-DSCH, et leur fournissent un certain nombre d'indications utiles à la réception de ces blocs. Le HS-SCCH porte notamment, pour chaque bloc HS-DSCH, un indicateur de format de transport et de ressources (TFRI, "Transport Format and Resource Indicator"), donnant les informations concernant le format de la partie dynamique du canal HS-DSCH: schéma de modulation employé, taille du bloc de transport, ressources physiques allouées (à savoir les codes de canal affectés aux HS-PDSCH utilisés pour le bloc). Ces informations sont envoyées sur le HS-SCCH juste avant l'émission du bloc HS-DSCH pour permettre la réception, la démodulation et le décodage du bloc.

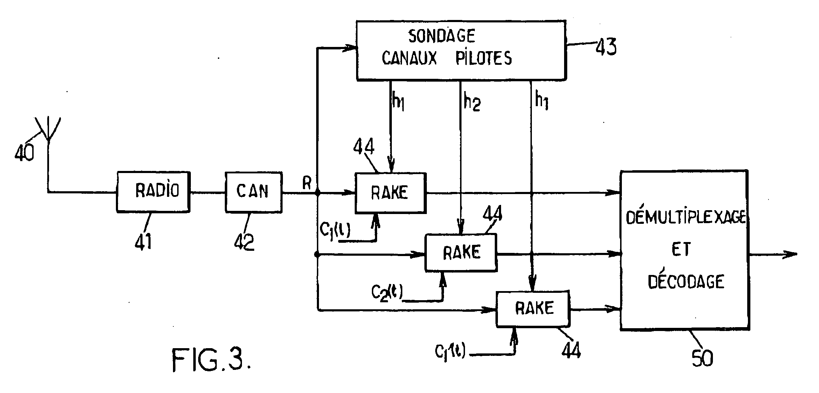

La figure 3 montre schématiquement un récepteur radio à m = 1 antenne de réception 40, capable de communiquer en mode HSDPA avec un émetteur selon la figure 1.

L'étage radio 41 exécute les opérations classiques d'amplification et de filtrage du signal radio capté par l'antenne 40, le transpose en bande de base ou en bande intermédiaire. Un convertisseur analogique-numérique (CAN) 42 numérise le signal et adresse le signal numérisé R à un module de sondage 43 et à des modules de réception 44.

Le module de sondage 43 calcule les corrélations du signal R avec des signaux pilotes émis par les n antennes d'émission pour estimer la réponse impulsionnelle $h_1$, $h_2$ de chacune des n voies. Dans l'UMTS, chaque station de base diffuse un ou plusieurs canaux pilote dits CPICH ("Common Pilot CHannel"), de facteur d'étalement 256, portant chacun un signal pilote respectif (voir section 5.3.3.1. de la spécification ETSI TS 125.211 précitée). Lorsque la station de base pratique la diversité spatiale avec plusieurs antennes d'émission, il est prévu un CPICH par antenne, ce qui permet aux terminaux d'estimer séparément les réponses. Le module de sondage 43 peut aussi utiliser comme signaux pilotes des séquences pilotes insérées dans le flux de signal transmis sur un canal dédié descendant de type DPCCH si un tel canal dédié est disponible.

Les réponses impulsionnelles $h_1$, $h_2$ sont fournies aux modules de réception 44 pour qu'ils procèdent à la détection des symboles transmis. Chaque module de réception 44 est par exemple de type rake, comme il est usuel. Il reçoit le signal R et détecte les symboles qu'il porte sur un canal physique à l'aide du code d'étalement alloué à ce canal physique et de la réponse inpulsionnelle estimée du canal de propagation. Dans l'exemple considéré ici, les différents HS-PDSCH portant le bloc HS-DSCH destiné au terminal sont répartis entre les antennes, de sorte que les modules rake 44 fonctionnent avec les réponses impulsionnelles et les codes d'étalement appariés, à savoir $\{h_1, c_1(t)\}$, $\{h_1, c'_1(t)\}$ et $\{h_2, c_2(t)\}$ respectivement. Le terminal a été averti que la station de base applique la règle de mapping canaux /antennes selon l'invention, soit lors de l'établissement de la session HSDPA soit par de l'information transmise sur le HS-SCCH, de sorte qu'il est en mesure d'apparier les réponses impulsionnelles et les codes d'étalement.

Les p = 3 séquences de symboles détectés par les modules de réception 44 sont adressés à une chaîne de démultiplexage et de décodage 50 qui exécute les opérations duales de la chaîne de codage et de multiplexage 30 de l'émetteur. Cette chaîne 50 comporte notamment le décodeur de canal qui, grâce aux propriétés du turbocode, cherche à détecter et corriger les erreurs de transmission dont le bloc reconstruit peut être affecté. Si des erreurs subsistent après décodage, une répétition du bloc B pourra être demandée par la fonctionnalité HARQ.

Lorsque la station de base a simultanément plusieurs sessions HSDPA distinctes avec plusieurs terminaux (ou avec un terminal multisession), il est avantageux que la transmission des informations de trafic relevant de ces sessions soit opérée en distribuant aussi uniformément que possible les HS-PDSCH entre les n antennes. Par exemple, s'il y a n = 2 antennes d'émission:

- chaque bloc HS-DSCH transmis sur un nombre pair p de HS-PDSCH donne lieu à p/2 HS-PDSCH par antenne;
- la moitié des blocs HS-DSCH transmis simultanément sur un nombre impair p de HS-PDSCH donne lieu à (p+1)/2 HS-PDSCH sur l'antenne 10 et à (p-1)/2 HS-PDSCH sur l'autre antenne 20;
- l'autre moitié des blocs HS-DSCH transmis simultanément sur un nombre impair p de HS-PDSCH donne lieu à (p-1 )/2 HS-PDSCH sur l'antenne 10 et à (p+1)/2 HS-PDSCH sur l'antenne 20.

On équilibre ainsi les puissances émises par les deux antennes, étant donné que les HS-PDSCH sont tous émis à la même puissance.

L'invention a été décrite précédemment dans son application au service HSDPA. On comprendra qu'elle comporte de nombreuses autres applications.

Dans le cadre de l'UMTS, la transmission multicode est aussi possible pour les canaux dédiés en mode circuit (canaux de transport TrCH). La session de communication utilise un canal de transport dédié auquel p canaux physiques sont alloués par configuration (plutôt que d'être alloués dynamiquement comme dans HSDPA). La station de base pourra obtenir la diversité spatiale d'émission selon l'invention en répartissant les p canaux physiques sur ses n antennes d'émission.

L'invention est également applicable à des systèmes autres que DS-CDMA, notamment à des systèmes OFDM, avec une autre forme d'accès multiple (voir par exemple "H. Rohling, et al., "Performance Comparison of Different Multiple Access Schemes for the Downlink of an OFDM Communication System", IEEE VTC'97, Phoenix, AZ, pp. 1365-1369). Par exemple, dans le cas de l'accès multiple par répartition en fréquence (FDMA, "Frequency-Division Multiple Access"), les ressources d'accès affectées aux canaux physiques distribués sur les antennes ne sont pas des codes d'étalement de spectre, mais des sous-ensembles de fréquences OFDM, dont la séparation en fréquence permet de distinguer les canaux physiques.

**Revendications**

1. Procédé d'émission radio à diversité spatiale dans un système de radiocommunication utilisant des ressources d'accès respectivement affectées à différents canaux physiques afin de séparer lesdits canaux physiques, le procédé comprenant les étapes suivantes:

   - produire un bloc de symboles numériques codés (B) à partir d'information de trafic relevant d'une session de communication, la production du bloc comprenant l'application d'un codage correcteur d'erreurs;
   - répartir les symboles codés du bloc en p séquences de symboles (S, S', S"), p étant un entier plus grand que 1; et
   - émettre les p séquences de symboles sur p canaux physiques respectifs au moyen de n antennes d'émission (10, 20), n étant un entier plus grand que 1,

   **caractérisé en ce que** chacune des p séquences de symboles est émise par l'intermédiaire d'une seule des n antennes, et **en ce que** chacune des n antennes est utilisée pour émettre $\lfloor p/n \rfloor$ ou $\lfloor p/n \rfloor$+1 séquences parmi les p séquences, $\lfloor p/n \rfloor$ désignant l'entier égal ou immédiatement inférieur au nombre p/n, et
   **en ce que** pour la transmission d'informations de trafic relevant de plusieurs sessions de communication, on distribue de façon sensiblement uniforme entre les n antennes (10, 20) les séquences de symboles résultant de la répartition des blocs produits à partir desdites informations de trafic.

2. Procédé selon la revendication 1, dans lequel avant d'émettre les p séquences d'un bloc de symboles numériques codés, on émet sur un canal de signalisation des informations de description des ressources d'accès respectivement affectées aux p canaux physiques utilisés pour l'émission des p séquences de ce bloc.

3. Procédé selon la revendication 1, dans lequel la session de communication utilise un canal dédié auquel lesdits p canaux physiques sont alloués par configuration.

4. Procédé selon l'une quelconque des revendications précédentes, dans lequel les ressources d'accès affectées aux canaux physiques sont des codes d'étalement CDMA.

5. Procédé selon l'une quelconque des revendications précédentes, dans lequel les ressources d'accès affectées aux canaux physiques sont des sous-ensembles de porteuses OFDM.

6. Emetteur radio pour un système de radiocommunication utilisant des ressources d'accès respectivement affectées à différents canaux physiques afin de séparer lesdits canaux physiques, l'émetteur comprenant:

   - n antennes d'émission (10, 20), n étant un entier plus grand que 1;
   - des moyens (33-35) de production de blocs de symboles numériques codés (B) à partir d'information de trafic relevant d'une session de communication, comprenant un codeur correcteur d'erreurs;
   - des moyens de segmentation (36) pour répartir les symboles codés d'un desdits blocs en un nombre p plus grand que 1 de séquences de symboles (S, S', S"); et
   - des moyens (37-39, 11-13, 21-23) pour émettre les p séquences de symboles sur p canaux physiques respectifs au moyen des n antennes d'émission,

   **caractérisé en ce que** les moyens pour émettre les séquences de symboles sont agencés pour émettre chacune des p séquences par l'intermédiaire d'une seule des n antennes et pour que chacune des n antennes soit utilisée pour émettre $\lfloor p/n \rfloor$ ou $\lfloor p/n \rfloor$+1 séquences parmi les p séquences, $\lfloor p/n \rfloor$ désignant l'entier égal ou immédiatement inférieur au nombre p/n, et
   **en ce que** les moyens pour émettre les séquences de symboles sont agencés pour distribuer de façon sensiblement uniforme entre les n antennes (10, 20) les séquences de symboles résultant de la répartition des blocs produits à partir d'informations de trafic relevant de plusieurs sessions de communication.

7. Station de base d'un système de radiocommunication cellulaire, incorporant un émetteur radio selon la revendication 6.

FIG.1.

## FIG.2.

SEGMENTATION BLOCS DE CODE — 33

CODAGE CANAL — 34

HARQ — 35

B

SEGMENTATION PAR CANAUX PHYSIQUES — 36

S    S'    S''

ENTRELACEMENT — 37

RÉARRANGEMENT/16-QAM — 38

MAPPING HS-PDSCH — 39

$(C_1(t))$   $(C_2(t))$   $(C_i(t))$

FIG.3.

**Office européen**

**des brevets**

**RAPPORT DE RECHERCHE EUROPEENNE**

Numéro de la demande

EP 05 01 6281

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | EP 1 195 937 A (TELEFONAKTIEBOLAGET LM ERICSSON) 10 avril 2002 (2002-04-10) * alinéas [0004] - [0013], [0024] - [0034], [0048] - [0054] * * figure 2 * ----- | 1-7 | H04B7/06 H04L1/06 |
| X | US 2003/235147 A1 (WALTON JAY R ET AL) 25 décembre 2003 (2003-12-25) * alinéas [0014], [0034] - [0040], [0048] - [0080], [0088] - [0093], [0108] - [0119] * * figures 3,5,8 * ----- | 1-7 | |
| A | US 2004/116077 A1 (LEE KYESAN ET AL) 17 juin 2004 (2004-06-17) * alinéas [0006], [0010], [0017], [0027] - [0035] * * page 1 * ----- | 1-7 | |
| A | US 2003/012171 A1 (SCHMIDL TIMOTHY M ET AL) 16 janvier 2003 (2003-01-16) * alinéas [0016] - [0028] * ----- | 1-7 | DOMAINES TECHNIQUES RECHERCHES (Int.Cl.7) |
| A | EP 0 817 401 A (LUCENT TECHNOLOGIES INC) 7 janvier 1998 (1998-01-07) * page 4, ligne 32 - page 5, ligne 59 * ----- | 1-7 | H04L H04B |

Le présent rapport a été établi pour toutes les revendications

| Lieu de la recherche | Date d'achèvement de la recherche | Examinateur |
|---|---|---|
| Munich | 16 septembre 2005 | Fernández Cuenca, B |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 05 01 6281

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-09-2005

| Document brevet cité au rapport de recherche | | Date de publication | Membre(s) de la famille de brevet(s) | | Date de publication |
|---|---|---|---|---|---|
| EP 1195937 | A | 10-04-2002 | AU | 1820702 A | 15-04-2002 |
| | | | WO | 0230032 A2 | 11-04-2002 |
| | | | TW | 543306 B | 21-07-2003 |
| | | | US | 2004052315 A1 | 18-03-2004 |
| US 2003235147 | A1 | 25-12-2003 | AU | 2003243681 A1 | 06-01-2004 |
| | | | CA | 2490520 A1 | 31-12-2003 |
| | | | EP | 1516441 A1 | 23-03-2005 |
| | | | WO | 2004002011 A1 | 31-12-2003 |
| US 2004116077 | A1 | 17-06-2004 | GB | 2391775 A | 11-02-2004 |
| US 2003012171 | A1 | 16-01-2003 | AUCUN | | |
| EP 0817401 | A | 07-01-1998 | JP | 10084324 A | 31-03-1998 |
| | | | JP | 2004007842 A | 08-01-2004 |
| | | | US | 6097771 A | 01-08-2000 |

EPO FORM P0460

Pour tout renseignement concernant cette annexe : voir Journal Officiel de l'Office européen des brevets, No.12/82